## Europäisches Patentamt
## European Patent Office
## Office européen des brevets

(19)

(11) Publication number: **0 033 360**
**B1**

(12)

# EUROPEAN PATENT SPECIFICATION

(45) Date of publication of patent specification: **19.09.84**

(51) Int. Cl.³: **G 03 B 21/00**

(21) Application number: **80106053.4**

(22) Date of filing: **06.10.80**

(54) **Hand-held transparency projector with simple advance mechanism.**

(30) Priority: **25.01.80 US 115581**

(43) Date of publication of application:
**12.08.81 Bulletin 81/32**

(45) Publication of the grant of the patent:
**19.09.84 Bulletin 84/38**

(84) Designated Contracting States:
**BE CH DE FR GB IT LI NL**

(56) References cited:
**DE-A-2 050 629**
**DE-A-2 415 875**
**FR-A-2 048 700**
**US-A-1 814 588**
**US-A-2 100 008**
**US-A-4 059 351**

(73) Proprietor: **View-Master International Group, Inc.**
**8585 SW Hall Boulevard**
**Portland, Oregon 97005 (US)**

(72) Inventor: **Laizans, Vitolds**
**1509 Southeast Holly Street**
**Portland, Oregon 97214 (US)**
Inventor: **Richardson, John J.**
**10 Reston Road**
**Wayne, New Jersey 07470 (US)**

(74) Representative: **Patentanwälte Grünecker, Dr. Kinkeldey, Dr. Stockmair, Dr. Schumann, Jakob, Dr. Bezold, Meister, Hilgers, Dr. Meyer-Plath et al**
**Maximilianstrasse 58**
**D-8000 München 22 (DE)**

Courier Press, Leamington Spa, England.

## Description

The present invention relates to hand-held projectors for projecting images from a film having perforations along an edge thereof. A hand-held projector of the general type to which the present invention relates is disclosed in US—A—4,059,351 and comprises the features which are recited in the pre-characterising portion of claim 1. Hence, a hand-held projector of the inventive type comprises a housing which includes a lens system in one end of the housing through which the above images are projected. Film advance means are provided for advancing the film in steps, one frame at a time, said film advance means comprising an advancing claw which upon an advancing movement of the film advance means engages the perforations of the film and which upon a return movement of said film advance means disengages said perforations. Said film advance means being in the form of push means disposed between a light source and the lens system, said light source being carried within the housing and disposed along the optical axis thereof, which comprises the lens system.

The hand-held projector according to US—A—4,059, 351 suffers from the drawback that the film strip must be manually threaded into a slot in the housing, a task that may not be easy for small children. Furthermore, the film strip of this prior art projector can only be changed by a series of steps that is relatively time consuming, inconvenient and virtually impossible for small children. The film strip of the prior art patent is handled directly by human hands and, therefore, picks up natural body oils and dirt that can reduce the quality of the projected image. Another drawback of said prior art projector is that it is easily possible for a small child to thread the film strip incorrectly because the wrong end of the film strip can easily be threaded into the slot of the housing before the mistake is discovered.

From DE—A—2050629 there is known a simple viewer which permits to watch images within the interior of the viewing device. Said German reference discloses a film cartridge containing an endless loop of film.

The general problem which has heretofore existed with hand-held projectors has been how to adapt the projector so that it is suitable for use with a film cartridge containing an endless loop of film. More specifically, the problem resides in avoiding interference of the film cartridge and the non-viewed film portion with the projector's light source. This interference problem is avoided by the viewing device of the German reference by providing a film cartridge having an internally mounted reflective surface and an adjacent opening in a side panel of the cartridge. Natural light enters the viewing device transversely through a light panel and is reflected by a reflective surface towards a cartridge aperture, the portion of the film to be viewed, and an aligned projector eye piece. In this way, the film image can be watched by a person without interference from the film cartridge or non-viewed portion of the film loop.

There is, in addition, known from US—A—1,814,588 a picture projector for use with an endless loop of film. The film is not contained in a film cartridge and must be "threaded" into a film holding and guiding means such that the film issues laterally from the inner turns of a film roll and then makes it twist at the bottom of a film housing for then passing upward as a substantially flat sheet.

The invention as claimed is intended to provide a remedy of the deficiencies of the prior art. It solves the problem of how to define a hand-held projector which can be easily operated by small children and which solves the problem of avoiding interference of a non-viewed film portion with the projector's light source.

The projector according to the present invention is prepared for projecting images simply by inserting a film cartridge within a cartridge opening in the projector housing; a task that is not too difficult for small children. With the inventive projector, the film loop can be easily changed simply by removing one film cartridge and replacing it with another. Unlike the most pertinent state of the art in the inventive projector the film loop is protected within the cartridge and, hence, no direct handling by human hands can occur, which otherwise might cause the film loop to pick up natural body oils and dirt that can reduce the quality of the projected images.

Furthermore, with the inventive projector, it is impossible for a small child to insert the film loop incorrectly because the film cartridge and cartridge opening of the housing are designed such that the cartridge must be necessarily orientated properly when inserted into the opening.

A further important improvement of the present invention is that the film advancing means of the inventive projector engages the film strip close to the image to be projected, so as to reduce the length of the film guide required to guide the film pass the aperture without buckling.

The embodiments of the invention will be described in connection with the following drawings annexed hereto, in which:

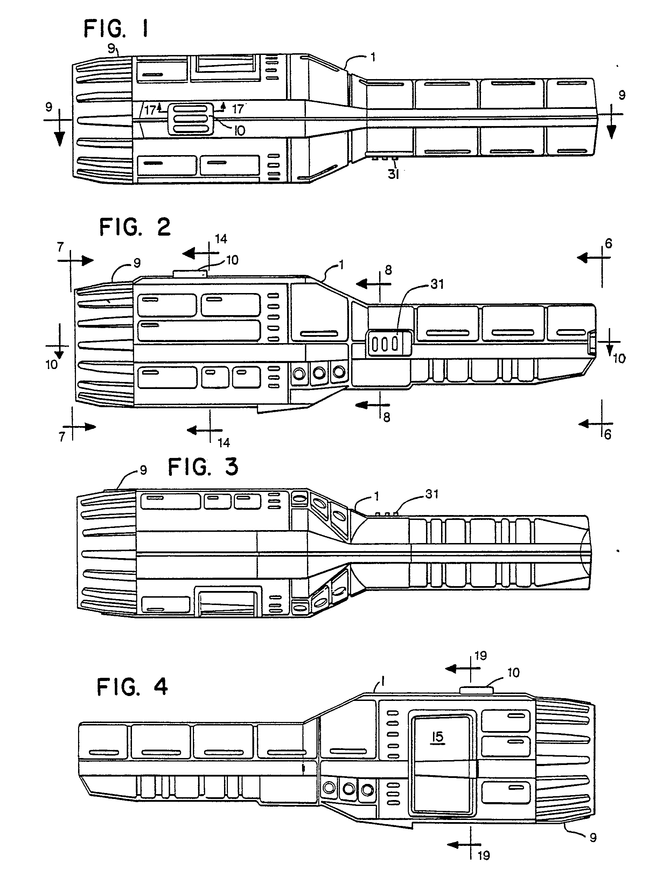

Figure 1 is a top plan view of the projector;

Figure 2 is a left side elevational view of the projector shown in Figure 1;

Figure 3 is a bottom plan view of the projector shown in Figure 1;

Figure 4 is a right side elevational view of the projector and cartridge shown in Figure 1;

Figure 5 is a perspective view of the cartridge;

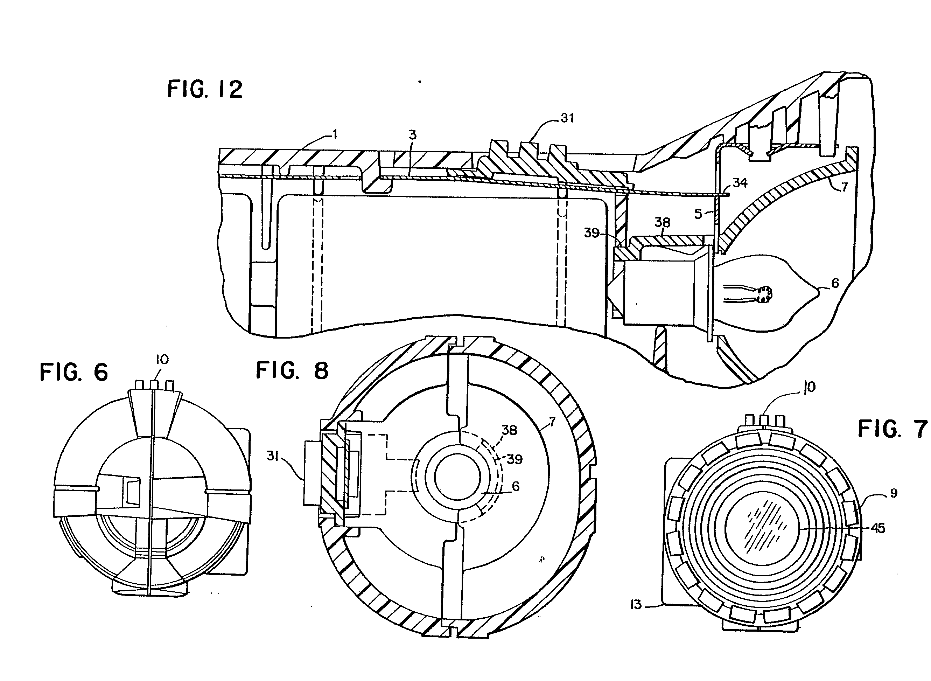

Figure 6 is a rear view of the projector of Figure 1;

Figure 7 is a front view of the projector shown in Figure 1;

Figure 8 is a sectional view taken along lines 8—8 of Figure 2;

Figure 9 is a sectional view taken along lines 9—9 of Figure 1;

Figure 10 is a sectional view taken along lines 10—10 in Figure 2;

Figure 11 is a sectional view taken along lines 11—11 of Figure 10;

Figure 12 is a sectional view taken along lines 12—12 of Figure 9;

Figure 13 is an exploded perspective view of the projector and cartridge shown in Figure 1 illustrating each of the various elements thereof;

Figure 14 is a sectional view taken along lines 14—14 in Figure 2;

Figure 15 is front side view of the film cartridge with cover cut-away;

Figure 16 is a sectional view taken along lines 16—16 of Figure 15 with cover in place;

Figure 17 is a sectional view taken along lines 17—17 of Figure 1;

Figure 18 is a sectional view taken along lines 18—18 of Figure 17; and

Figure 19 is a sectional view taken along lines 19—19 of Figure 4.

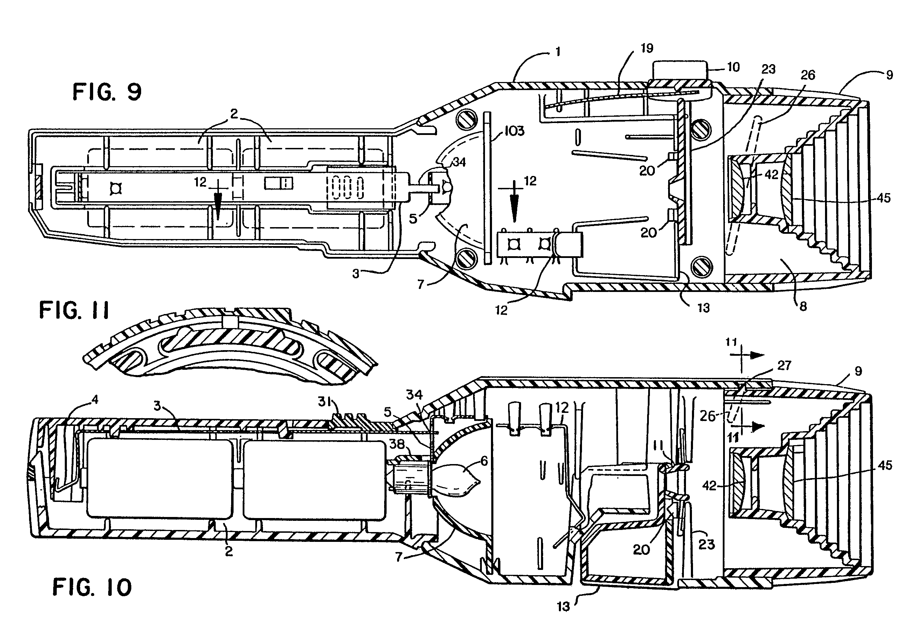

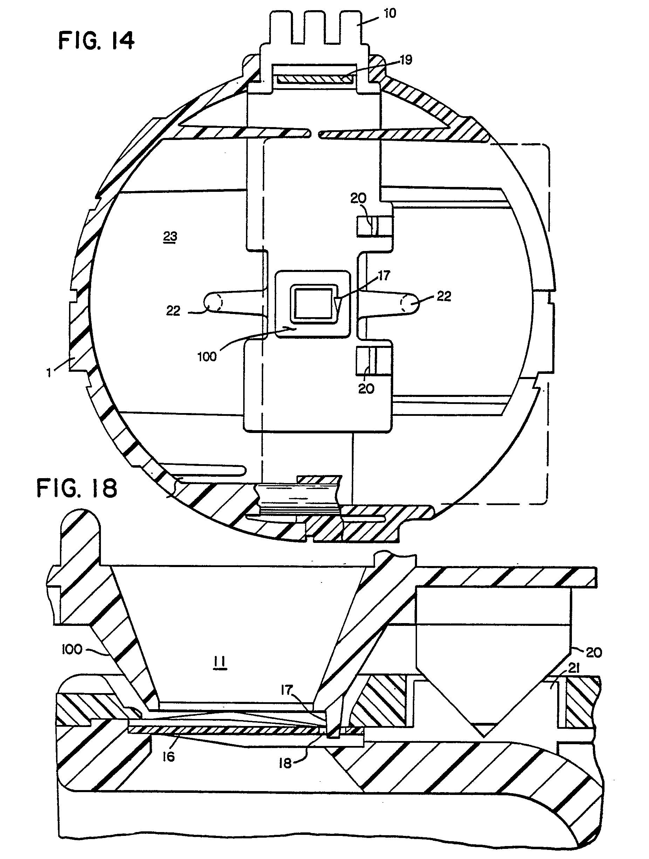

Referring now in more detail to the accompanying drawings, Figure 13 shows housing 1 which contains battery compartment 2 with battery contact strip 3 secured to the battery compartment 2. Battery strip 3 has a spring end 4 for holding the base of a battery. On the other end of battery strip 3 is contact tip 34 which makes resilient contact with bulb contact 5. Button 31 is in slidable contact with housing 1 and strip 3 having a first position where there is no electrical contact between strip 3 and bulb 6 and a second position which activates battery strip 3 so that tip 34 makes contact with bulb contact 5 to send electrical current from the battery in battery compartment 2 to bulb 6. Bulb 6 is housed in reflector 7 by means of bulb 6 being pressed into cutout 38 and into interference fit with collar 39 for secure placement. Transparent shield 103 is placed between reflector 7 and cartridge 13 such that parts from breakage of bulb 6 cannot fall out. In Figures 9, 10 and 13, reflector 7 reflects light to lens system 8 which includes lens 42 and lens 45 and is housed in focus housing 9. Located between reflector surface 7 and housing 9 containing lens system 8 is film drive actuator or push means 10. Film drive actuator or push means 10 contains aperture 11 allowing transmission of light from bulb 6 through lens system 8 onto any surface along the axis formed by the line through bulb 6 and lens system 8. Also housed in housing 1 is cartridge spring 12 which secures cartridge 13 in place when cartridge 13 is inserted in opening 15 of housing 1. When cartridge 13 is inserted in housing 1 through opening 15 film 16 is located perpendicular to the axis formed by a line drawn through the center of bulb 6 and lens system 8 as well as being adjacent to aperture 11 when actuator 10 is in its normal position (projection mode).

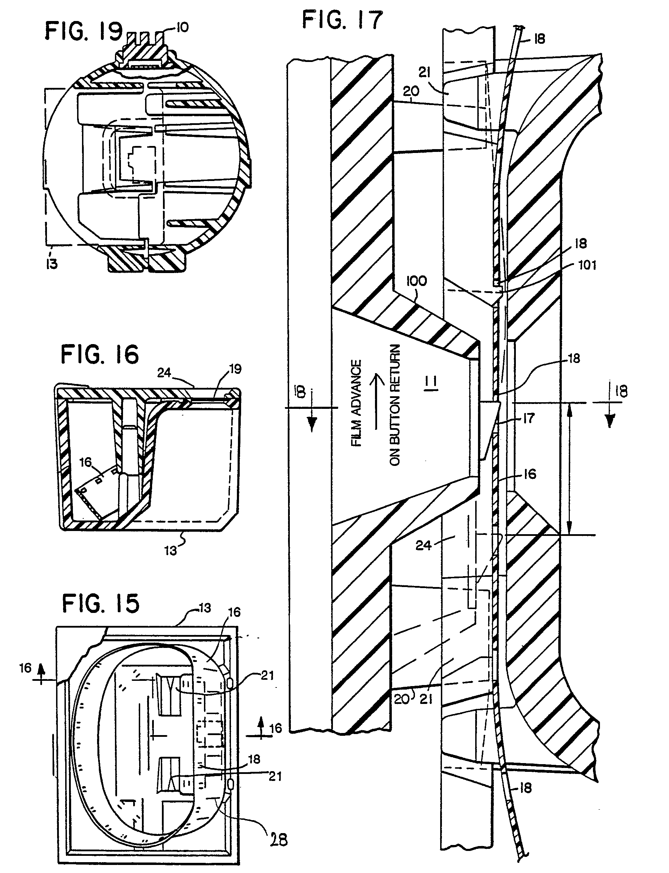

As cartridge 13 is inserted into housing 1 through opening 15 cartridge cover is cammed by protrusions 20 away from advance claw 17. In this manner advance claw 17 is protected from breakage as cartridge 13 is being installed. When protrusions 20 engage guide notches 21 (Fig. 15) in cartridge 13 the cartridge moves towards actuator 10 by the force imposed by cartridge spring 12, thereby locating cartridge.

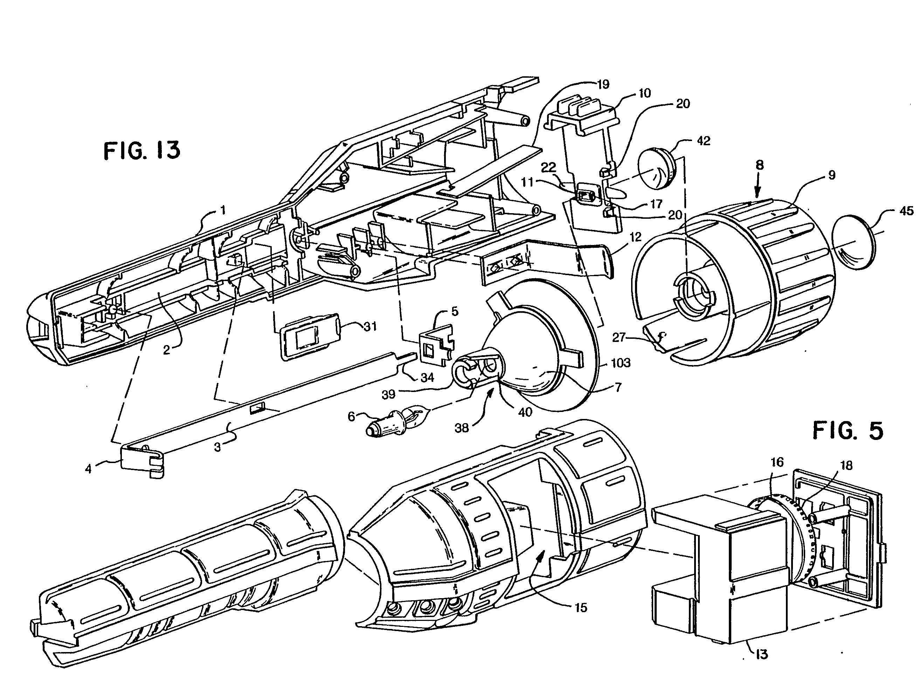

Turning now to Figures 14 and 18 we see that aperture 11 is housed in a raised tapered rectangular boss 100. On boss 100 is advance claw 17 which is tapered such that it comes out of contact with perforations 18 when actuator 10 is depressed and makes contact with perforations 18 of film 16 when actuator 10 is released. In this manner film claw 17 advances film 16 through perforations 18 one frame at a time each actuator 10 is released after depressing. Also mounted on actuator 10 is spring 19 which holds actuator 10 against housing 1 and is resilient such that actuator 10 may be depressed in relation to housing 1 in order to have film advance claw 17 move film 16 one frame. To hold film 16 in place during downward movement of actuator 10 a claw 101 shown in Figure 17 engages film perforations 18. Claw 101 is integral with cartridge 13 cover shown in Figure 5. Spring 19 then places tension on actuator 10 to return switch 10 to its initial or release position after actuator 10 is released.

Located on actuator 10 as shown in Figure 13 are guide protrusions 20 which mate with guide notches 21 of cartridge 13 as shown in Figure 15. The protrusions 20 and notches 21 retain actuator aperture 11 in slidable alignment with the frames of film 16 so that each frame is in alignment with the axis formed by a line drawn through the center of lens system 8 and bulb 6. Alignment of actuator 10 in relation to housing 1 is provided by spring arms 22 being integral with actuator 10 for slidable contact along the inner surface 23 of housing 1, as shown in Figure 14, the resilient nature of said arms 22 maintaining actuator 10 in slidable contact with cartridge 13 when cartridge 13 is inserted into housing 1. Film advance claw 17 has access to film 16 and perforations 18 through cartridge aperture 24 as shown in Figure 16. As can be seen, cartridge aperture 24 when placed in housing 1 has the same axis as aperture 11 when spring 19 maintains actuator 10 in its normal position. Aperture 24 is sized such that perforations 18 of film strip 16 are exposed to advance claw 17 to allow said advance claw 17 to make contact with such perforations 18 to advance film 16 frame by frame on each advance stroke of the push means.

Located in lens housing 9 is pin 27 which mates in slidable contact with slot 26 on the inner wall of housing 1. Since slot 26 is on an angle it allows lens housing 9 to move forward and backward within housing 1 to adjust the focus of the projected image as it is being passed from the lens system 8 to its point of viewing.

Turning now to Figure 15 and Figure 16 film 16 is placed in cartridge 13 such that there is no surface contact between the pictures located in frames 28 on film 16 and the cartridge housing 13 to prevent scratching of the images on film 16. This is accomplished by having the position of continuous loop film 16 that is to be presently viewed parallel to the surface of cartridge 13 that contains cartridge aperture 24 while having the rest of the loop 16 being angled as it is located in cartridge 13 between the side containing aperture 24 and the opposite side of the cartridge 13, as shown in Figure 15. In particular, said film 16 is guided in an aligned, parallel relation to the cartridge aperture 24 through guide means internal to the film cartridge. These guide means of the film cartridge 13 guides a portion of the film loop 16 opposite the viewing portion along a path within the cartridge 13 such that an inner surface of such opposite portion forms an acute angle with the front cover of the cartridge 13, thereby to avoid interference of such portion with the optical axis, while permitting easy advancing of the film 16.

## Claims

1. A hand-held projector for projecting images from a film (16) having perforations (18) along an edge thereof comprising a housing (1) which includes a lens system (8) in one end of the housing (1) through which such images are projected and defining an optical axis therein; film advance means (10) for advancing the film in steps one frame at a time, said film advance means comprising an advancing claw (17) which upon an advancing movement of the film advance means (10) engages the perforations (18) of the film (16) to advance such film and upon a return movement of such film advance means (10) disengages such perforations, said film advance means being in the form of push means (10) disposed between a light source (6) and the lens system (8), said light source being carried within the housing (1) and disposed along the optical axis, characterised in that the housing (1) includes means defining a cartridge opening (15) adapted to receive a film cartridge (13) containing an endless loop of film (16) therein;

the housing (1) including means (12, 20) for selectively securing the film cartridge (13) within the cartridge opening (15) such that the light source (6), a cartridge aperture (24), the viewing portion of the film loop (16) and a push means aperture (11) are all in alignment with the optical axis to enable the image exposed by such viewing portion to be projected through the lens system (8);

and wherein guide means of the film cartridge (13) guides a portion of the film loop (16) opposite the viewing portion along a path within the cartridge (13), such that an inner surface of such opposite portion forms an acute angle with the front cover of the cartridge (13), thereby to avoid interference of such portion with the optical axis, while permitting easy advancing of the film loop (16).

2. The projector of claim 1, characterised in that the film cartridge (13) includes means (101) which engages the perforations (18) of the film (16) to hold the film (16) in place during the return stroke of the advance means (10) while allowing the film (16) to advance during the advance stroke of such advance means (10).

3. The projector of claim 1, characterised in that the push means (10) is slidably supported by the housing (1) and includes aligning means (22) for maintaining it in proper alignment between the film cartridge (13) and a portion (23) of the housing (1) when the cartridge (13) is secured within the cartridge opening (15), whereby the advancing claw (17) of the advance means (10) is aligned to engage the perforations (18) of the film (16) during the advancing stroke of the advance means (10).

4. The projector of claim 3, characterised in that the aligning means (22) comprises resilient arms in slidable contact with the housing (1) and having protrusions in slidable contact with the film cartridge (13) when such cartridge (13) is secured within the cartridge opening (15).

5. The projector of one of the preceding claims, characterised in that said advancing claw (17) extends into the film cartridge (13) through the cartridge aperture (11, 24) to engage the perforations (18) of the film (16) when the cartridge is secured within the cartridge opening (15), said film being guided in an aligned, parallel relation to the cartridge aperture (24) through guide means internal to the film cartridge.

## Revendications

1. Projecteur tenu à la main pour la projection d'images à partir d'un film (16) présentant des perforations (18) le long de l'un de ses bords, comprenant un boîtier (1) qui comprend un système (8) de lentilles dans une première extrémité du boîtier (1), à travers lequel ces images sont projetées et définissant un axe optique à l'intérieur du boîtier; des moyens (10) d'avance du film destinés à faire avancer le film pas à pas, d'une image à la fois, lesdits moyens d'avance du film comprenant une griffe (17) d'avance qui, à la suite d'un mouvement d'avance des moyens (10) d'avance du film, s'enclenchent avec les perforations (18) du film (16) pour faire avancer ce film et, à la suite d'un mouvement de retour de ces moyens (10) d'avance du film, se dégage de ces perforations, lesdits moyens d'avance du film se présentent sous la forme d'un moyen (10) de poussée disposé entre une source de lumière (6) et le système (8) de lentilles, ladite source de lumière étant montée à l'intérieur du boîtier (1) et disposée le long de l'axe optique, caractérisé en ce que le boîtier (1) comprend des moyens définissant un logement (15) de cartouche conçu pour recevoir une cartouche (13) de film contenant une boucle sans fin formée d'un film (16);

le boîtier (1) comprenant des moyens (12, 20) destinés à fixer sélectivement la cartouche (13) de film à l'intérieur du logement (15) de cartouche de manière que la source (6) de lumière, une ouverture (24) de cartouche, la partie de visée de la boucle (16) du film et une ouverture (11) du moyen de poussée soient toutes en alignement avec l'axe optique pour permettre à l'image exposée par cette partie de visée d'être projetée à travers le système (8) de lentilles;

et dans lequel des moyens de guidage de la cartouche (13) du film guident une partie de la boucle (16) du film opposée à la partie de visée, le long d'un trajet situé à l'intérieur de la cartouche (13), de manière que la surface intérieure de cette partie opposée forme un angle aigu avec le couvercle avant de la cartouche (13) pour éviter ainsi l'interférence de cette partie avec l'axe optique, tout en permettant une avance aisée de la boucle (16) du film.

2. Projecteur selon la revendication 1, caractérisé en ce que la cartouche (13) du film comprend un moyen (101) qui s'enclenche avec les perforations (18) du film (16) pour maintenir le film (16) en position pendant la course de retour des moyens (10) d'avance tout en permettant au film (16) d'avancer pendant la course d'avance de ces moyens (10) d'avance.

3. Projecteur selon la revendication 1, caractérisé en ce que le moyen (10) de poussée est monté de façon à pouvoir coulisser sur le boîtier (1) et comprend un élément (22) d'alignement destiné à le maintenir en alignement approprié entre la cartouche (13) du film et une partie (23) du boîtier (1) lorsque la cartouche (13) est fixée dans le logement (15) de cartouche, de manière que la griffe (17) d'avance des moyens d'avance (10) soit alignée pour s'enclencher avec les perforations (18) du film (16) pendant la course d'avance des moyens d'avance (10).

4. Projecteur selon la revendication 3, caractérisé en ce que les moyens d'alignement (22) comprennent des bras élastiques en contact de glissement avec le boîtier (1) et comportant des saillies en contact de glissement avec la cartouche (13) du film lorsque cette cartouche (13) est fixée dans le logement (15) de cartouche.

5. Projecteur selon l'une des revendications précédentes, caractérisé en ce que ladite griffe (17) d'avance s'étand à l'intérieur de la cartouche (13) du film en passant par l'ouverture (11, 24) de cartouche pour s'enclencher avec les perforations (18) du film (16) lorsque la cartouche est fixée dans le logement (15) de cartouche, ledit film étant guidé en alignement et parallèlement à l'ouverture (24) de la cartouche à travers les moyens de guidage, intérieurement à la cartouche du film.

**Patentansprüche**

1. Handprojektor zum Projizieren von Bildern von einem Film (16), der entlang einer Kante Perforationen (18) aufweist, mit einem Gehäuse (1), welches ein Linsensystem (8) in einem Ende des Gehäuses (1) enthält, durch welches derartige Bilder projiziert werden und welches eine optische Achse darin definiert; Filmtransporteinrichtung (10) zum schrittweisen Transport des Films um jeweils ein Bild, wobei die Filmtransporteinrichtung ein Vorschubklaue (17) aufweist, welche bei einer Vorschubbewegung der Filmtransporteinrichtung (10) in die Perforationen (18) des Films (16) eingreift, um diesen Film vorwärts zu bewegen und bei einer Rückwärtsbewegung der Filmtransporteinrichtung (10) außer Eingriff mit diesen Perforationen gelangt, wobei die Filmtransporteinrichtung als Schubeinrichtung (10) zwischen einer Lichtquelle (6) und dem Linsensystem (8) angeordnet ist, wobei die Lichtquelle innerhalb des Gehäuses (1) gehalten und längs der optischen Achse angeordnet ist, dadurch gekennzeichnet, daß das Gehäuse (1) Einrichtungen aufweist, welche eine Kassettenöffnung (15) bilden, welche im Stande ist, eine Filmkassette (13) aufzunehmen, welche eine endlose Schleife des Films (16) enthält;

daß das Gehäuse (1) Einrichtungen (12, 20) zum selektiven Festlegen der Filmkassette (13) innerhalb der Kassettenöffnung (15) derart aufweist, daß die Lichtquelle (6), eine Kassettenöffnung (24), der Betrachtungsabschnitt der Filmschleife (16) und eine Schubeinrichtungsöffnung (11) alle in der optischen Achse ausgerichtet sind, so daß das auf dem Betrachtungsabschnitt vorliegende Bild durch das Linsensystem (8) projizierbar ist;

und wobei eine Führungseinrichtung der Filmkassette (13) einen Abschnitt der Filmschliefe (16) gegenüber dem Betrachtungsabschnitt längs einer Bahn innerhalb der Kassette (13) so führt, daß eine Innenoberfläche eines solchen gegenüberliegenden Abschnittes einen spitzen Winkel mit der Vorderabdeckung der Kassette (13) bildet, wodurch eine Interferenz eines solchen Abschnittes mit der optischen Achse vermieden ist, während die Filmschleife (16) leicht vorwärts bewegbar ist.

2. Projektor nach Anspruch 1, dadurch gekennzeichnet, daß die Filmkassette (13) Einrichtungen augweist (101), welche die Perforationen (18) des Films (16) eingreifen, um den Film (16) während des Rückkehrhubes der Transporteinrichtung (10) an Ort und Stelle zu halten, wohingegen sie dem Film (16) während des Vorwärtshubes der Transporteinrichtung (10) eine Vorwärtsbewegung gestatten.

3. Projektor nach Anspruch 1, dadurch gekennzeichnet, daß die Schubeinrichtung (10) verschieblich vom Gehäuse (1) gehaltert ist und eine Ausrichteinrichtung (22) zum Aufrechterhalten der korrekten Ausrichtung zwischen der Filmkassette (13) und einem Abschnitt (23) des Gehäuses aufweist, wenn die Kassette (13) innerhalb der Kassettenöffnung (15) gehalten ist, wodurch die Vorschubklaue (17) der Transporteinrichtung (10) ausgerichtet ist, um die Perforationen (18) des Films (16) während des Vorwärtshubes der Transporteinrichtung (10) einzugreifen.

4. Projektor nach Anspruch 3, dadurch gekennzeichnet, daß die Ausrichteinrichtung (22) elastische Arme in Schiebekontakt mit dem Gehäuse (1) aufweist, und Vorsprünge in Schiebekontakt mit der Filmkassette (13) aufweist, wenn diese Kassette (13) innerhalb der Kassettenöffnung (15) gehalten ist.

5. Projektor nach einem der vorangehenden Ansprüche, dadurch gekennzeichnet, daß die Vorschubklaue (17) sich in die Filmkassette (13) durch die Kassettenöffnung (11, 24) hineinerstreckt, um in die Perforationen (18) des Filmes (16) einzugreifen, wenn die Kassette in der Kassettenöffnung (15) gehalten ist, wobei der Film mit Hilfe einer im Inneren der Filmkassette angeordneten Führungseinrichtung parallel nach der Kassettenöffnung (24) ausgerichtet ist.

FIG. 1

FIG. 2

FIG. 3

FIG. 4

1

FIG. 13

FIG. 5

0 033 360

FIG. 12

FIG. 6

FIG. 8

FIG. 7

0 033 360

FIG. 9

FIG. 11

FIG. 10

0 033 360

FIG. 14

FIG. 18

FIG. 19

FIG. 17

FIG. 16

FIG. 15

FILM ADVANCE

ON BUTTON RETURN

0 033 360

6